# EUROPÄISCHE PATENTANMELDUNG

(11) **EP 4 650 753 A1**
(43) Veröffentlichungstag der Anmeldung: **19.11.2025**
(21) Anmeldenummer: 24175958.8
(22) Anmeldetag: 15.05.2024
(51) Int. Cl.: G01N 21/25, C12Q 1/686, G01N 21/64

(54) **VORRICHTUNG ZUR LUMINESZENZDETEKTION FÜR TEMPERATURABHÄNGIGE REAKTIONSSYSTEME**

(71) Anmelder: Gerbion GmbH & Co. KG, 70806 Komwestheim (DE)
(72) Erfinder: Ebin, Holger, 79346 Endingen (DE); Nolting, Clemens, 79346 Endingen (DE); Stocker, Johannes, 79346 Endingen (DE)
(74) Vertreter: mepat Patentanwälte

(57) **Zusammenfassung**

Die vorliegende Erfindung stellt eine Vorrichtung zur Lumineszenzdetektion für temperaturabhängige Reaktionssysteme mit einer Anregungseinheit (2) bereit, die ein drehbares Trägerrad (14) mit zumindest zwei daran rotationssymmetrisch angeordneten LEDs (14') und eine Halteplatte (21) mit einem Referenz-Anschlussplatz (22') und zumindest einem Anschlussplatz (22) aufweist, die rotationssymmetrisch korrespondierend zu den LEDs (14') angeordnet sind. Das Trägerrad (14) ist entsprechend einer Anzahl der LEDs (14') in zumindest zwei Drehwinkelstellungen anordenbar, in denen ein Strahlengang jeweils einer der zumindest zwei LEDs (14') auf den Referenz-Anschlussplatz (22') und ein Strahlengang der zumindest einen weiteren LED (14') auf den zumindest einen Anschlussplatz (22) trifft. Die Anregungseinheit (2) weist einen Referenz-Lichtwellenleiter (7) und zumindest ein Lichtwellenleiter-Bündel aus einer Anzahl erster Lichtwellenleiter (5) auf, wobei der Referenz-Lichtwellenleiter (7) mit seiner Eingangsseite an dem Referenz-Anschlussplatz (22') und das zumindest eine Lichtwellenleiter-Bündel mit einer Eingangsseite der ersten Lichtwellenleiter (5) an dem zumindest einen Anschlussplatz (22) angeordnet sind. Eine Probenhaltereinheit (3) weist einen Probenhalter (30) mit einer Mehrzahl Probenaufnahmen (33) auf, die einer summierten Anzahl der ersten Lichtwellenleiter (5) des zumindest einen Lichtwellenleiter-Bündels entspricht, wobei jeder erste Lichtwellenleiter (5) mit einer Ausgangseite an jeweils einer der Probenaufnahmen (33) angeordnet ist. Eine Detektoreinheit (4) weist einen Referenz-Photosensor (40") und eine Mehrzahl Photosensoren (40') und eine Mehrzahl an zweiten Lichtwellenleitern (6) auf, die der Mehrzahl der Probenaufnahmen (33) entspricht, wobei der Referenz-Lichtwellenleiter (7) mit seiner Ausgangsseite an dem Referenz-Photosensor (40") und jeder zweite Lichtwellenleiter (6) mit einer Ausgangsseite an jeweils einem der Photosensoren (40`) und mit einer Eingangsseite an jeweils einer der Probenaufnahmen (33) angeordnet ist.

## Beschreibung

Die Erfindung betrifft eine Vorrichtung zur Lumineszenzdetektion für temperaturabhängige Reaktionssysteme.

Aus dem Stand der Technik sind Vorrichtungen zum Emittieren und Detektieren von Licht bekannt, die in Multiplex-PCR-Anwendungen verwendet werden. PCR-Proben in dafür geeigneten Gefäßen werden mit Licht vorbestimmter Wellenlänge beleuchtet und das aus den Proben emittierte Licht (aus Fluoreszenzanregung) wird an Photodetektoren weitergeleitet und die detektierten Signale analysiert.

In der WO 2023 / 069 651 A1 ist ein Fluoreszenz-Detektionssystem beschrieben, bei dem eine Probe mit Licht mehrerer Lichtquellen bestrahlt wird. Die Vielzahl von Lichtquellen ist auf einem waagrechten, drehbaren Teller angeordnet. Das Licht jeder LED wird über Strahlteiler auf einen unter dem drehbaren Teller angeordneten Probenhalter geleitet. Von der Probe emittiertes Licht wird durch den Strahlteiler zurück nach oben durch ein Linsensystem und einen vorschaltbaren Emissionsfilter und durch ein oberhalb des waagrechten, drehbaren Tellers liegenden Emissions-Filterrad an einen Detektor geleitet.

EP 1 962 084 A1 zeigt eine weitere Vorrichtung zum Emittieren und Detektieren von Licht. Probengefäße sind über Lichtleiter mit einem Anregungsmodul und einem Detektionsmodul optisch gekoppelt. In dem Detektionsmodul sind die Detektoren kreisförmig angeordnet, wobei den Detektoren ein drehbares Filterrad vorgeordnet ist. In dem Anregungsmodul sind Lichtquellen ringförmig angeordnet. Die Lichtquellen können in dem Anregungsmodul unterschiedliche Wellenlängen ausstrahlen, sodass Farbwechsel bzw. Änderung der Wellenlänge des Lichts möglich ist. Die Lichtquellen sitzen auf einem drehbaren Rad.

Die Vorrichtungen zur Lumineszenzdetektion, die aus dem Stand der Technik bekannt sind, bestehen aus vielen zueinander beweglichen Komponenten, die in einem komplexen Aufbau zueinander stehen.

Ausgehend von diesem Stand der Technik ist es Aufgabe der vorliegenden Erfindung, eine verbesserte Vorrichtung zur Lumineszenzdetektion bereitzustellen.

Diese Aufgabe wird durch eine Vorrichtung mit den Merkmalen des Anspruchs 1 gelöst.

Weiterbildungen der Vorrichtung sind in den Unteransprüchen ausgeführt.

Gemäß einer ersten Ausführungsform der Vorrichtung zur Lumineszenzdetektion für temperaturabhängige Reaktionssysteme hat diese eine Anregungseinheit, die ein drehbares Trägerrad mit zumindest zwei daran rotationssymmetrisch angeordneten LEDs und eine Halteplatte mit einem Referenz-Anschlussplatz und zumindest einem Anschlussplatz aufweist. Der Referenz-Anschlussplatz und der zumindest eine Anschlussplatz sind rotationssymmetrisch korrespondierend zu den LEDs angeordnet. Dabei kann das Trägerrad entsprechend einer Anzahl der LEDs in zumindest zwei Drehwinkelstellungen angeordnet werden, in denen jeweils ein Strahlengang einer der zumindest zwei LEDs auf den Referenz-Anschlussplatz und ein Strahlengang der zumindest einen weiteren LED auf den zumindest einen Anschlussplatz trifft. Dabei weist die Anregungseinheit einen Referenz-Lichtwellenleiter und zumindest ein Lichtwellenleiter-Bündel aus einer Anzahl erster Lichtwellenleiter auf, wobei der Referenz-Lichtwellenleiter mit seiner Eingangsseite an dem Referenz-Anschlussplatz, und das zumindest eine Lichtwellenleiter-Bündel mit einer Eingangsseite der ersten Lichtwellenleiter an dem zumindest einen Anschlussplatz angeordnet sind. Die Vorrichtung hat eine Probenhaltereinheit, die einen Probenhalter mit mehreren Probenaufnahmen aufweist, die einer summierten Anzahl der ersten Lichtwellenleiter des zumindest einen Lichtwellenleiter-Bündels entspricht, wobei jeder erste Lichtwellenleiter mit einer Ausgangseite an jeweils einer der Probenaufnahmen angeordnet ist. Die Vorrichtung hat ferner eine Detektoreinheit, die einen Referenz-Photosensor und mehrere Photosensoren und mehrere zweite Lichtwellenleiter aufweist, die der Mehrzahl der Probenaufnahmen entspricht, wobei der Referenz-Lichtwellenleiter mit seiner Ausgangsseite an dem Referenz-Photosensor und jeder zweite Lichtwellenleiter mit einer Ausgangsseite an jeweils einem der Photosensoren und mit einer Eingangsseite an jeweils einer der Probenaufnahmen angeordnet ist.

Als "Reaktionssystem" wird vorliegend insbesondere eine zumeist flüssige Lösung oder Suspension einer Probe verstanden, die aus einer PCR (Polymerase-Kettenreaktion) erhalten wird und daher einen entsprechenden spezifischen Abschnitt von DNA oder RNA enthält.

"Lumineszenz" bedeutet hier eine Lichtemission eines Farbstoffes, der an einem RNA- oder DNA-Moleküls anhaftet, nach einer vorherigen Anregung durch Energie. Der Begriff umfasst die rein lichtinduzierte Anregung "Fluoreszenz", bei der das Leuchten sofort nach der Anregung eintritt und nur eine sehr kurze Zeitspanne anhält.

"Rotationssymmetrisch" meint die gleichmäßig verteilte Anordnung der zwei oder mehr Plätze, die den Referenz-Anschlussplatz und den einen oder die mehreren Anschlussplatz bzw. Anschlussplätze umfassen, wobei die Anordnung entlang einer vorbestimmten Kreislinie um eine verlängerte Drehachse des Trägerrads vorliegt. Diese Kreislinie wird durch die Kreislinie auf dem Trägerrad vorbestimmt auf der die zwei oder mehrere LEDs gleichmäßig verteilt und damit rotationssymmetrisch um die Drehachse angeordnet sind. Die "Drehachse" ist durch die Mittelachse des Trägerrads bestimmt. Also meint "rotationssymmetrisch korrespondierend" in Bezug auf die Anschlussplätze für Lichtwellenleiter und LEDs, dass die Anordnung aller Anschlussplätze (für Referenz-Lichtwellenleiter und Lichtwellenleiter-Bündel) der Anordnung der LEDs auf dem Trägerrad entspricht.

Der "Strahlengang" ist bevorzugt parallel zu der Drehachse des Trägerrads, sodass eine koaxiale Anordnung von Strahlengängen der LEDs zur Drehachse des Trägerrads gebildet wird oder anders gesagt die LEDs auf einer um die Drehachse (entspricht der Mittelachse) des Trägerrads liegenden Kreisbahn angeordnet sind. Dies erleichtert bei Drehung des Trägerrads die Anordnung der LEDs in Bezug auf die Anschlussplätze der mit diesen verbundenen Lichtwellenleitern. Diese leiten den jeweiligen Strahlengang zu einer Ausgangseite der ersten Lichtwellenleiter, sodass ein Anregungsstrahlengang durch die Probenaufnahme verläuft. In der Probenaufnahme verläuft ein Emissionsstrahlengang zu der Eingangsseite der zweiten Lichtwellenleiter, sodass dort in einem einsetzbaren Probengefäß mit Probe nach Anregung emittiertes Licht in dem Emissionsstrahlengang durch die zweiten Lichtwellenleiter an die Detektoreinheit geleitet werden kann.

Die "summierte Anzahl" der ersten Lichtwellenleiter ergibt sich aus dem Produkt der Bündelanzahl und der Lichtwellenleiteranzahl pro Bündel.

Die erfindungsgemäße Vorrichtung bietet mehrere Vorteile: So ermöglicht das Anstrahlen mehrerer Bündel erster Lichtwellenleiter das gleichzeitige Anstrahlen der entsprechend summierten Anzahl an Probenaufnahmen und damit das Anregen der gleichen summierten Anzahl Proben bzw. Probengefäßen mit Proben, die in den Probenaufnahmen aufgenommen werden können. Die radiale Anordnung ermöglicht es, dass mehrere Bündel aus jeweils mehreren Lichtwellenleitern gleichzeitig beleuchtet werden, ohne weitere Komponenten mechanisch verfahren zu müssen. Im Vergleich zu solchen Vorrichtungen, wie sie aus dem Stand der Technik bekannt sind, wird hier erfindungsgemäß vorteilhaft die Anzahl der beweglichen Teile minimiert und es wird eine konstruktiv einfach aufgebaute und kompakte Vorrichtung gebildet.

Nach einer weiteren Ausführungsform der erfindungsgemäßen Vorrichtung weisen die LEDs das gleiche Emissionsspektrum auf. Zwischen den LEDs und der Halteplatte ist eine Filterscheibe angeordnet, die mit dem Trägerrad drehfest verbunden ist und entsprechend der Anzahl der LEDs zumindest zwei rotationssymmetrisch angeordnete Filteröffnungen aufweist, in denen unterschiedliche optische Filter im Strahlengang der LEDs aufgenommen sind. Die optischen Filter können Farbfilter, Tiefband-, Hochband- oder auch Bandpassfilter sein, um unterschiedliche Anregungsstrahlungen bereitzustellen. Die Anregungsstrahlung entspricht dabei verschiedenen Anregungswellenlängen und bildet einen Strahlengang des von den LEDs ausgesandeten Lichtes ab. Bevorzugt werden Farbfilter eingesetzt, die in einer besonders bevorzugten Ausführungsform der Vorrichtung die Farben gelb, grün, blau, violett und rot haben, sodass die Anregungsstrahlung unterschiedliche Wellenlängen aufweist. In Peak-Wellenlängen angegeben, können die Farbfilter die folgenden Wellenlängenbereiche abdecken, wobei bevorzugt fünf Farbbereiche ausgesucht werden: Lila zwischen 400 nm und 435 nm, Blau zwischen 435 nm und 480 nm, Blau-Grün zwischen 480 nm und 500 nm, Grün zwischen 500 nm und 560 nm, Gelb-Grün zwischen 560 nm und 580 nm, Gelb zwischen 580 nm und 595 nm, Orange zwischen 595 nm und 610 nm und Rot zwischen 610 nm und 760 nm. Die radiale Anordnung von Filterscheibe zu Trägerrad ermöglicht es, dass die Bündel aus mehreren Lichtwellenleitern mit je einer Filterfarbe beleuchtet werden können, ohne dazu weitere Komponenten mechanisch verfahren zu müssen. Die Anzahl der beweglichen Teile wird weiter verringert. In einer alternativen Ausführungsform der Vorrichtung können die LEDs unterschiedliche Emissionsspektren aufweisen, die die unterschiedlichen Anregungsstrahlungen bereitstellen. In diesem Fall kann je nach genutzten Emissionsspektren auf eine Filterscheibe verzichtet werden.

Nach einer weiteren Ausführungsform der erfindungsgemäßen Vorrichtung weist diese ein Gehäuse mit einem Gehäusedeckel auf. In dem Gehäuse, das sehr kompakt sein kann, sind die Anregungseinheit, die Probenhaltereinheit und die Detektoreinheit angeordnet. Die Probenaufnahmen des Probenhalters sind in einer Offenstellung des Gehäusedeckels zugänglich, sodass vorteilhaft Probengefäße einfach von oben eingelegt oder herausgeholt werden können. In dem Gehäuse ist nach noch einer weiteren Ausführungsform der erfindungsgemäßen Vorrichtung eine Batterie vorgesehen, die die Komponenten der Vorrichtung mit Energie versorgt und ist somit mobil nutzbar. Das Gehäuse kann auch tragbar gestaltet sein. Optional zusätzlich oder alternativ kann das Gehäuse eine elektrische Verbindungsschnittstelle aufweisen, die mit einer externen Stromversorgung verbunden werden kann. Die externe Stromversorgung kann eine mobil nutzbare Akkueinheit sein oder ein für das jeweilig verfügbare Stromnetz geeigneter Netzstecker sein, sodass die Vorrichtung sowohl mit Akku als auch im Netzbetrieb betrieben werden kann.

Ferner umfasst die erfindungsgemäße Vorrichtung nach noch einer weiteren Ausführungsform eine Heizeinheit, die auf einer Innenseite des Gehäusedeckels angeordnet und dazu ausgebildet ist, in einer Schließstellung des Gehäusedeckels mit dem Probenhalter in thermische Wirkverbindung zu treten. Der Probenhalter und die in diesen eingesetzten Proben können damit temperiert und von oben geheizt werden, um Kondensation in den Probengefäßen zu vermeiden.

Die Heizeinheit ist nach noch einer weiteren Ausführungsform der erfindungsgemäßen Vorrichtung mittels einer federnden Aufhängung in dem Gehäusedeckel angeordnet. Die federnde Aufhängung ist dazu ausgebildet, die Heizeinheit in der Schließstellung des Gehäusedeckels auf den Probenhalter zu pressen. Die Heizeinheit kann ein flächiges Heizelement aufweisen, das bevorzugt aus zumindest zwei Schichten aufgebaut ist, die eine in der Schließstellung des Gehäusedeckels dem Probenhalter zugewandte Heizschicht und eine dem Gehäusedeckel zugewandte Isolierschicht aufweisen. Nach einer weiteren Ausführungsform kann das Heizelement aus drei Schichten aufgebaut sein, die eine in der Schließstellung des Gehäusedeckels dem Probenhalter zugewandte Wärmeleitschicht, eine dem Gehäusedeckel zugewandte Isolierschicht und eine dazwischen liegende Heizschicht aufweisen. Beispielhaft kann die Wärmeleitschicht aus Aluminium als Aluminium-Heizdeckel und Heizschicht eine Platine mit Heizelementen, wie z. B. Peltier-Elemente oder elektrische Heizelemente, wie Flächenheizelemente, sein. Die Isolierschicht kann bspw. ein Verbundwerkstoff aus harzgebundener Glasfaser sein bzw. zusätzliche Füllstoffe aufweisen. Die Anpresskraft, mit der die Heizeinheit in der Schließstellung des Gehäusedeckels auf den Probenhalter gepresst ist, bemisst sich nach der Federkraft von Federn, mit denen die Aufhängung ausgestattet ist. Hierdurch wird eine verbesserte Wärmeübertragung erreicht, indem der Kontakt zwischen flächigem Heizelement und Probenhalter sichergestellt wird.

Nach noch einer weiteren Ausführungsform der erfindungsgemäßen Vorrichtung ist der Probenhalter aus einem wärmeleitfähigen Material als Vollkörper gefertigt und jede Probenaufnahme wird durch eine Ausnehmung gebildet. Ferner ist die Ausnehmung zu einer ersten Seite des Probenhalters geöffnet und mit jeweils einer Emissionsöffnung zur Aufnahme der Eingangsseite des jeweiligen zweiten Lichtwellenleiters und mit jeweils einer Anregungsöffnung zur Aufnahme der Ausgangsseite des jeweiligen ersten Lichtwellenleiters verbunden. Die Emissionsöffnungen sind an einer zweiten Seite des Probenhalters ausgebildet, die bevorzugt orthogonal zu der ersten Seite steht, und die Anregungsöffnungen sind an einer dritten, von der ersten Seite abgewandten Seite des Probenhalters ausgebildet. Die orthogonale Ausrichtung der Emissionsöffnungen zu den Anregungsöffnungen ermöglicht, dass die Sensoren kein Streu- oder direktes Licht aus den Anregungsöffnungen erreicht. Jede "Ausnehmung" ist ausgebildet zur Aufnahme eines Probengefäßes und bevorzugt zu der Seite geöffnet, an die in der Schließstellung die Heizeinheit gedrückt wird. Jede Ausnehmung hat eine Aufnahmeachse, entlang der die Probengefäße eingelegt und herausgeholt werden, wobei die Aufnahmeachsen der Ausnehmungen parallel zueinander und parallel zu der zweiten Seite sind und die erste Seite und die dritte Seite orthogonal schneiden. Der Probenhalter ist als ein länglicher Quader oder ein quaderähnlicher Körper gebildet, in den Probengefäße in den Ausnehmungen in der gleichen Höhe aufgenommen werden können. "Probengefäße" können Phiolen, Reagenzgläser oder Reaktionsgefäße aus Kunststoff oder Glas sein, vorzugsweise mit Verschlussdeckel.

Nach noch einer weiteren Ausführungsform der erfindungsgemäßen Vorrichtung hat die Probenhaltereinheit zumindest ein Temperierelement, das bevorzugt ein Peltier-Element ist, wobei das zumindest eine Temperierelement an einer vierten, von der zweiten Seite abgewandten Seite des Probenhalters angeordnet und thermisch mit dem Probenhalter verbunden ist. Das Temperierelement ist bevorzugt seitlich zu den Probenaufnahmen bzw. parallel zu deren Aufnahmeachsen angeordnet. Je nach Breite des Probenhalters können mehrere Temperierelemente parallel nebeneinander an einer Seite des Probenhalters angeordnet sein, um so eine gleichmäßige Temperierung des Probenhalters von einer Seite zu ermöglichen, bevorzugt werden zwei Peltier-Elemente verwendet, die flach sind und mit denen sowohl geheizt als auch gekühlt werden kann. Es können auch einzelne Temperierelemente an den Stirnseiten des Probenhalters vorliegen, um für eine noch gleichmäßigere Temperierung zu sorgen.

Ferner weist die Probenhaltereinheit nach noch einer weiteren Ausführungsform der erfindungsgemäßen Vorrichtung ein Kühlkörperelement und zumindest einen Lüfter auf, wobei das Kühlkörperelement und der Lüfter - oder mehrere Lüfter - an einer von dem Probenhalter abgewandten Seite des zumindest einen Temperierelements angeordnet sind und mit diesem in thermischer Wirkverbindung stehen. Bevorzugt ist das Kühlkörperelement mit dem Temperierelement verbunden und der oder die Lüfter ist (sind) an einer von dem Temperierelement abgewandten Seite des Kühlkörperelement angeordnet. Die Anzahl der Lüfter bemisst sich nach der Breite des Kühlkörperelement, bei mehr als einem Lüfter sind diese nebeneinander entlang der Längsausdehnung des Kühlkörperelement angeordnet. Bevorzugt kann das Kühlkörperelement ein Kühlrippenelement sein, es sind aber auch andere Kühlkörperausgestaltungen möglich. In einer alternativen Ausführungsform der erfindungsgemäßen Vorrichtung ist entweder das Kühlkörperelement oder eben einer oder mehrere Lüfter vorgesehen, wobei in einer Variante ohne Kühlkörperelement der Lüfter das Peltier-Element direkt belüftet. Vorteilhaft kann die Probenhaltereinheit die zu untersuchenden Proben während der Messung halten und Wärme zu- bzw. ableiten.

In beispielhaften und keinesfalls beschränkenden Ausführungsformen der erfindungsgemäßen Vorrichtung ist vorgesehen, dass die Anregungseinheit zumindest drei, beispielsweise vier oder fünf rotationssymmetrisch auf dem Trägerrad angeordnete LEDs und an der Halteplatte außer dem Referenzanschlussplatz entsprechend zumindest zwei, beispielsweise drei oder vier Anschlussplätze aufweist, sodass die Summe aus Anschlussplätzen einschließlich des Referenzanschlussplatzes der Anzahl der LEDs entspricht. Entsprechend kann das Trägerrad in zumindest drei, beispielsweise vier oder fünf Drehwinkelstellungen angeordnet werden, in denen der Strahlengang jeweils einer der zumindest drei, vier oder fünf LEDs auf den Referenz-Anschlussplatz und der Strahlengang der zumindest zwei, drei oder vier weiteren LEDs auf die Anschlussplätze trifft. Dabei weist die Anregungseinheit entsprechend zumindest zwei, beispielsweise drei oder vier Lichtwellenleiter-Bündel aus den ersten Lichtwellenleitern auf, die mit der Eingangsseite an den jeweils zumindest zwei, drei oder vier Anschlussplätzen angeordnet sind. Mit einer Anordnung, die beispielsweise fünf LEDs und vier Anschlussplätze für vier Lichtwellenleiter-Bündel aufweist, können so in jeder Drehwinkelstellung des Trägerrads zeitgleich vier Probengruppen mit Licht vier unterschiedlicher Wellenlängen angeregt werden. Das Licht der jeweils fünften LED wird durch den Referenz-Lichtwellenleiter direkt zum Referenz-Photodetektor geleitet. Ein beispielhafter Messzyklus umfasst die sukzessive Anordnung des Trägerrads in jeder Drehwinkelstellung, sodass nacheinander jede LED jede Probengruppe bestrahlt und durch den Referenz-Lichtwellenleiter zu dem Referenz-Photodetektor gelangt. Falls in einem anderen beispielhaften Messzyklus die Proben nicht mit allen Farben bestrahlt werden sollen, können auch nur vorbestimmte Drehwinkelstellungen verwendet werden. Die Temperierelemente und Lüfter der Probenhaltereinheit können in dieser bevorzugten Ausführungsform der erfindungsgemäßen Vorrichtung mit der Heizeinheit im Gehäusedeckel operativ gekoppelt sein und einer gewünschten Temperierung des Probenhalters dienen. Beispielhaft kann der Heizdeckel auf über 110 °C erhitzt werden, wobei die Proben in den Probengefäßen auf einen Temperaturbereich zwischen etwa 60 °C und 100 °C erhitzt werden können; es ist eine ungleichmäßige Erwärmung durch den Heizdeckel möglich.

Nach noch einer weiteren Ausführungsform der erfindungsgemäßen Vorrichtung ist zwischen der Filterscheibe und der Halteplatte eine Kollimatorscheibe angeordnet, die mit der Filterscheibe und dem Trägerrad drehfest verbunden ist und entsprechend der Anzahl der LEDs zumindest zwei rotationssymmetrisch Linsenöffnungen mit darin angeordneten optischen Linsen aufweist, die den Strahlengang der zumindest zwei LEDs jeweils auf den Referenzanschlussplatz und den zumindest einen Anschlussplatz lenken. "Lenken" meint hierin, dass der Strahlengang der LEDs auf die Anschlussplätze für die Lichtwellenleiter gesammelt bzw. konzentriert werden kann. Die Linsen in den Linsenöffnungen sind optional, sie können in einer weiteren Ausführungsform der erfindungsgemäßen Vorrichtung auch wegfallen; dann bilden die Linsenöffnungen eine Art "Lichttunnel" für die Strahlengänge der LEDs und zentrieren diese. Alternativ ist es möglich, dass die Kollimatorscheibe auch nur mit der Filterscheibe oder dem Trägerrad drehfest verbunden ist.

Für die Halteplatte, die den Referenz-Anschlussplatz und den zumindest einen Anschlussplatz bereitstellt, ist nach noch einer weiteren Ausführungsform der erfindungsgemäßen Vorrichtung vorgesehen, dass der Referenz-Anschlussplatz eine Anschlussöffnung ist und der zumindest eine Anschlussplatz durch eine Anzahl an Anschlussöffnungen gebildet wird, die der Anzahl der ersten Lichtwellenleiter des zumindest einen Lichtwellenleiter-Bündels entspricht. Nach einer weiteren Ausführungsform der erfindungsgemäßen Vorrichtung beträgt die Anzahl der ersten Lichtwellenleiter des zumindest einen Lichtwellenleiter-Bündels zumindest zwei, drei oder vier. Es können mehrere Lichtwellenleiter-Bündel mit jeweils mehreren ersten Lichtwellenleitern vorgesehen sein, wobei die Anzahl der Lichtwellenleiter-Bündel und die Anzahl der ersten Lichtwellenleiter pro Bündel mit der Anzahl der Aufnahmen im Probenhalter, bzw. von der Anzahl der Photosensoren der Detektoreinheit, und der Anzahl der LEDs auf dem Trägerrad zusammenhängen. Die Anzahl der ersten Lichtwellenleiter pro Bündel entspricht dem Quotienten aus der Anzahl der Probenaufnahmen bzw. Photosensoren geteilt durch die Anzahl der Lichtwellenleiter-Bündel, bzw. der Anschlussplätze, die der Anzahl der LEDs weniger eins entspricht.

Weist eine Vorrichtung neben dem Referenz-Photosensor beispielsweise 16 Photosensoren bzw. Probenaufnahmen und fünf LEDs, d. h. vier Anschlussplätze auf, so enthält jedes Lichtwellenleiter-Bündel (16 geteilt durch vier) vier erste Lichtwellenleiter. Damit ergeben sich vier Probengruppen, die über die vier Bündel mit Strahlung von vier der fünf LEDs angeregt werden, wobei jede Probengruppe vier Probenaufnahmen umfasst, die über die Lichtwellenleiter des jeweiligen Bündels derselben Anregungsstrahlung ausgesetzt sind. Ist die Anzahl der Photosensoren bzw. Probenaufnahmen ein Vielfaches von vier, können in einem Lichtwellenleiter-Bündel bevorzugt vier Lichtwellenleiter vorliegen. Dies ermöglicht das gleichzeitige Anregen einer Vierergruppe an Proben mit der gleichen Anregungsstrahlung. In einem anderen Beispiel kann dann eine Vorrichtung, bei der 20 Photosensoren bzw. Probenaufnahmen zur Verfügung stehen, mit vier ersten Lichtwellenleitern pro Bündel fünf Anschlussplätze, d. h. fünf Bündel und sechs LEDs aufweisen. Damit können fünf Vierergruppen mit unterschiedlichen Strahlungen angeregt werden, wobei jede Vierergruppe mit derselben Strahlung angeregt wird. Alternativ dazu kann eine Vorrichtung mit 20 Photosensoren bzw. Probenaufnahmen, die fünf LEDs bzw. vier Anschlussplätze und damit vier Bündel aufweist, fünf erste Lichtwellenleiter pro Bündel aufweisen. Damit entstehen vier Probengruppen aus jeweils fünf Probenaufnahmen, wobei die Probenaufnahmen jeder Gruppe mit derselben Anregungsstrahlung bestrahlt werden, die sich für die Probengruppen unterscheidet. Die verwendeten Photosensoren können integrierte Filter aufweisen. Damit kann die Anzahl der beweglichen Teile noch weiter verringert werden, da keine beweglichen Teile auf Seiten der Photosensoren notwendig sind. Photosensoren mit integrierten Filtern sind zudem kostengünstig.

Nach noch einer weiteren Ausführungsform der erfindungsgemäßen Vorrichtung weist die Probenhaltereinheit eine Isolierhalterung mit Anschlussöffnungen für die ersten Lichtwellenleiter und eine Isolierplatte mit Anschlussöffnungen für die zweiten Lichtwellenleiter auf. Dabei sind die Isolierhalterung und die Isolierplatte miteinander verbunden. Die Anschlussöffnungen der Isolierhalterung, die an der dritten Seite des Probenhalters angeordnet ist, fluchten mit den Anregungsöffnungen des Probenhalters. Und die Anschlussöffnungen der Isolierplatte, die an der zweiten Seite des Probenhalters angeordnet ist, fluchten mit den Emissionsöffnungen des Probenhalters. "Fluchten" meint hierbei, dass die jeweiligen Anschlussöffnungen und Anregungs- bzw. Emissionsöffnungen miteinander korrespondieren, sodass sich die ersten Lichtwellenleiter an ihrem ausgangsseitigen Ende durch die jeweiligen Anschlussöffnungen und Anregungsöffnungen erstrecken, sodass die durch die ersten Lichtwellenleiter geleitete Anregungsstrahlung in die Probenaufnahmen und damit direkt in darin eingesetzte Probengefäße ungehindert möglichst reflexions- und brechungsarm eintreten kann und einheitliche Messungen ermöglicht werden. Entsprechend erstrecken sich die zweiten Lichtwellenleiter an ihrem eingangsseitigen Ende durch die jeweiligen Anschlussöffnungen und Emissionsöffnungen, um die von den Proben emittierte Lumineszenzstrahlung aufzufangen bzw. einzukoppeln. Die beiden Bauteile Isolierhalterung und Isolierplatte wirken zum einen wärmedämmend und bieten zum anderen eine Befestigungsfläche bzw. Klebefläche für die Lichtwellenleiter, damit diese an Ort und Stelle fixiert werden können.

Nach noch einer weiteren Ausführungsform der erfindungsgemäßen Vorrichtung sieht die Detektoreinheit eine Platine vor, auf der die Photosensoren (mehrere) und der Referenz-Photosensor angeordnet sind. Ferner weist die Detektoreinheit eine Anschlussplatte mit Anschlussöffnungen für die zweiten Lichtwellenleiter und den Referenz-Lichtwellenleiter auf. Dabei sind die Anschlussöffnungen in der Anschlussplatte korrespondierend zu den Photosensoren und dem Referenz-Photosensor auf der Platine angeordnet, sodass ein Strahlengang von der Ausgangsseite jedes zweiten Lichtwellenleiters auf einen der Photosensoren und ein Strahlengang von der Ausgangsseite des Referenz-Lichtwellenleiters auf den Referenz-Photosensor trifft. Eine Zuordnung zwischen Ausgangseite der zweiten Lichtwellenleiter auf die Photosensoren kann neben der physischen Zuordnung auch durch eine Software nachträglich erfolgen.

Ferner weist die Detektoreinheit nach noch einer weiteren Ausführungsform der erfindungsgemäßen Vorrichtung ein Detektorgehäuse auf, in dem die Platine mit den Photosensoren und dem Referenz-Photosensor befestigt ist, und einen Detektor-Gehäusedeckel. Dieser ist mit dem Detektorgehäuse dicht verbunden und weist eine Durchgangsöffnung auf, in der ein Rahmen aufgenommen ist, der die Anschlussöffnungen an der Anschlussplatte umgibt. Die Detektoreinheit bildet damit eine abgeschlossene Einheit, die eine Abschottung von Fremdlicht ermöglicht, das die Detektion des Lichts aus den zweiten Lichtwellenleitern stören könnte. Es sind keine beweglichen Teile auf der Sensorseite notwendig, da die Komponenten der Detektoreinheit fest miteinander verschraubt sind und die Lichtwellenleiter in ihrer Anordnung bleiben, wodurch die Qualität der Messung insgesamt hoch ist und reproduzierbare Ergebnisse erzielt werden können.

Wenn beispielsweise die Platine mit den Photosensoren insgesamt 16, also vier mal vier Photosensoren neben dem einen Referenz-Photosensor aufweist, kann jeder von einem Probenhalter mit 16 Probenaufnahmen ausgehende Lichtwellenleiter aufgenommen werden und eine gleichzeitige Messung aller in den Aufnahmen einsetzbaren Probengefäße kann erfolgen (wenn alle Plätze voll besetzt sind). Das Detektorgehäuse kann ferner eine Datenverarbeitungseinheit oder ein Kommunikationsmittel zu einer Datenverarbeitungseinheit hausen, die jeweils mit der Platine mit den Photosensoren und dem Referenz-Photosensor elektrisch und elektronisch verbunden sind.

Nach noch einer weiteren Ausführungsform der erfindungsgemäßen Vorrichtung hat die Anregungseinheit einen Schrittmotor mit einer Antriebsachse (entspricht Drehachse), die mit dem Trägerrad verbunden ist. Der Schrittmotor ist dazu ausgebildet, das Trägerrad in den zumindest zwei Drehwinkelstellungen anzuordnen. Ferner ist der Schrittmotor dazu ausgebildet, das Trägerrad in einer ersten Drehrichtung zu bewegen. Das Trägerrad kann, wenn es alle Drehwinkelstellungen nacheinander eingenommen hat, entgegen der ersten Drehrichtung zurück in seine Ausgangsstellung gedreht werden. Das Trägerrad ist als Platine ausgestaltet und weist einen spiralförmig gedrehten, flexiblen Platinenabschnitt auf, mit der eine Verbindung mit einer Steuerungselektronik ermöglicht wird und das Trägerrad zumindest in die erste Drehrichtung um eine volle Drehung gedreht werden kann. Zusätzlich oder alternativ kann vorgesehen sein, dass der Schrittmotor an einer Verbindungsplatte befestigt ist, die eine Öffnung aufweist, durch die sich die Antriebsachse des Schrittmotors erstreckt. Hierbei ist die Halteplatte parallel und beabstandet zu der Verbindungsplatte angeordnet und ist zur Ausrichtung in Bezug auf die Antriebsachse mit der Verbindungsplatte durch zumindest ein Abstandshalterelement verbunden. Dies stellt sicher, dass die Anordnung des Referenz-Anschlussplatzes und des zumindest einen Anschlussplatzes an der Halteplatte der Anordnung der zumindest zwei LEDs an dem Trägerrad in den zumindest zwei Drehwinkelstellungen entspricht und der Strahlengang jeweils einer der zumindest zwei LEDs auf den Referenz-Anschlussplatz und ein Strahlengang der zumindest einen weiteren LED auf den zumindest einen Anschlussplatz trifft. Die Antriebsache des Schrittmotors entspricht bevorzugt der Drehachse der Halteplatte, sodass eine koaxiale Anordnung von Antriebs- und Drehachse entsteht, was die Ausrichtung der Halteplatte sowie der in einer Ausführungsform damit verbundenen Filterscheibe und Kollimatorscheibe erleichtert.

Nach noch einer weiteren Ausführungsform der erfindungsgemäßen Vorrichtung weisen die ersten Lichtwellenleiter, die zweiten Lichtwellenleiter und der Referenz-Lichtwellenleiter einen optischen Kern aus Kunststoff, z. B. aus Polymethylmethacrylat oder ggf. Polycarbonat auf. Ein Kunststoffkern ist unempfindlicher gegen mechanische Beanspruchung als Glas, sodass geringere Durchmesser und kleinere Biegeradien möglich sind. Ferner müssen die Enden nicht so aufwändig poliert werden, wie es bei Glasfaserkabeln der Fall ist, die Verlegung innerhalb der Vorrichtung ist damit einfach.

Das Gehäuse der Vorrichtung kann ferner eine Datenverarbeitungseinheit und eine Kommunikationsschnittstelle hausen. Die Vorrichtung weist bevorzugt kein Display oder keine Anzeigefläche auf, sondern die Datenverarbeitungseinheit ist dazu ausgebildet, die von den Photosensoren erfassten Signale in elektronische Daten oder Datenpakete zu wandeln und mittels der Kommunikationsschnittstelle abrufbar bereitzustellen, sodass die Daten von einer dafür vorgesehenen weiteren, externen Datenverarbeitungseinheit ausgelesen werden können. Die externe Datenverarbeitungseinheit kann dazu mit einem Programm oder einer App gekoppelt sein, mit der ein Benutzer der Vorrichtung diese steuern und so z. B. Messungen starten, Temperatur einstellen, die Stellung des Farbfilters einstellen, Daten auslesen und Daten verarbeiten kann. Die Kommunikation zwischen der Vorrichtung und einer mit der Vorrichtung in Kommunikation stehenden Datenverarbeitung kann drahtgebunden oder drahtlos erfolgen. Im Falle einer drahtlosen Kommunikation kann ein Nahfeldfunkstandard, wie z. B. Bluetooth^{®}, genutzt werden.

Weitere Ausführungsformen der Vorrichtung sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- **Fig. 1**: eine perspektivische Ansicht der erfindungsgemäßen Vorrichtung,
- **Fig. 2**: eine perspektivische Ansicht der erfindungsgemäßen Vorrichtung mit Gehäuse,
- **Fig. 3**: eine Detailansicht mehrerer Komponenten der erfindungsgemäßen Vorrichtung,
- **Fig. 4**: eine Explosionsansicht der Anregungseinheit,
- **Fig. 5**: eine Explosionsansicht der Probehaltereinheit,
- **Fig. 6**: eine Explosionsansicht der Detektoreinheit, und
- **Fig. 7**: eine Explosionsansicht der Heizeinheit im Gehäusedeckel.

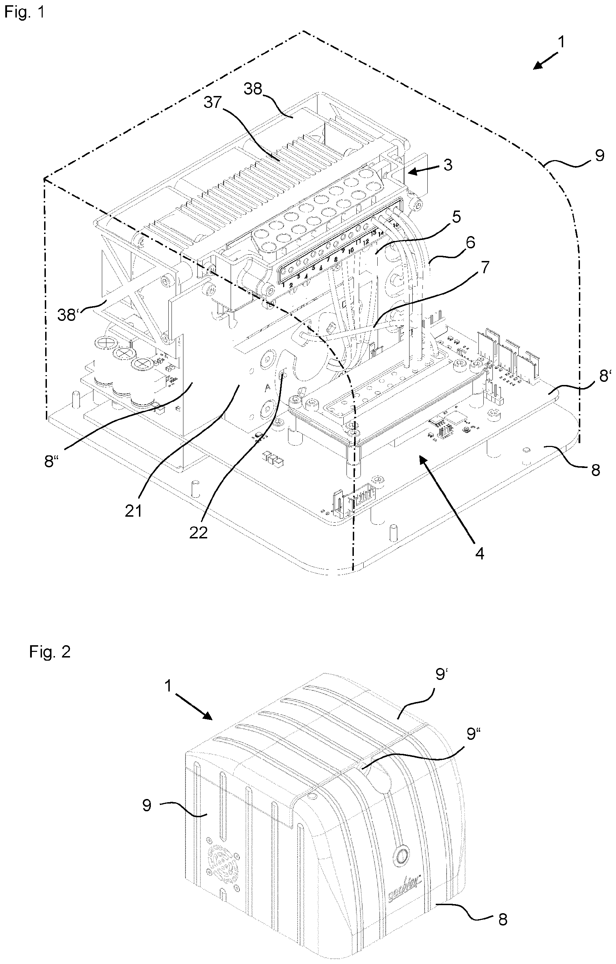

**Fig. 1** zeigt die erfindungsgemäße Vorrichtung 1 zur Lumineszenzdetektion für temperaturabhängige Reaktionssysteme mit einer Bodenplatte 8, die als Gehäuseboden für das Gehäuse 9 (in Fig. 1 gestrichelt) dient, das alle Komponenten haust. Das Gehäuse 9 hat einen Gehäusedeckel 9` wie in **Fig. 2** gezeigt, der schwenkbar an das Gehäuse 9 angelenkt ist und mittels einer mechanischen Verriegelung 9" auf Knopfdruck geöffnet und manuell verschlossen werden kann.

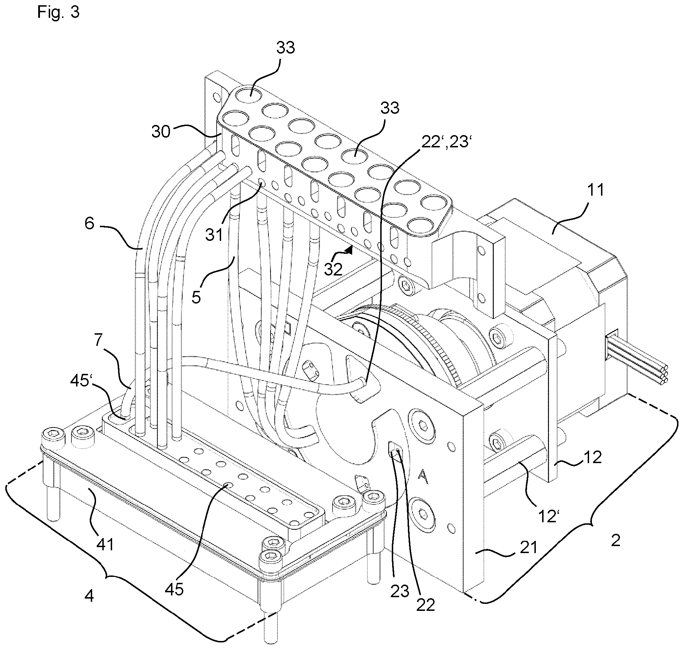

Kompakt zusammengesetzt weist die Vorrichtung 1 eine Anregungseinheit 2, die auf der Bodenplatte 8 angeordnet ist, sowie eine - siehe **Fig. 1** - davor angeordnete Detektoreinheit 4 auf, die von einem Gehäuseteil 8` gehaust ist. An der Anregungseinheit 2 ist eine Halteplatte 8" vorgesehen, an der oberhalb der Anregungseinheit 2 eine Probenhaltereinheit 3 angeordnet ist. Die Anregungseinheit 2 ist mit der Probehaltereinheit 3 optisch über erste Lichtwellenleiter 5 gekoppelt. Die Probenhaltereinheit 3 ist ferner über zweite Lichtwellenleiter 6 mit der Detektoreinheit 4 optisch gekoppelt (aus Übersichtsgründen sind nur ein Teil der Lichtwellenleiter 5, 6 in den Figuren dargestellt). In **Fig. 3** ist diese Verbindung nochmals genauer dargestellt, wobei aus der Probenhaltereinheit 3 nur der Probenhalter 30 gezeigt ist.

Nachfolgend sind in den **Fig. 3** bis **7** die einzelnen Komponenten im Detail dargestellt.

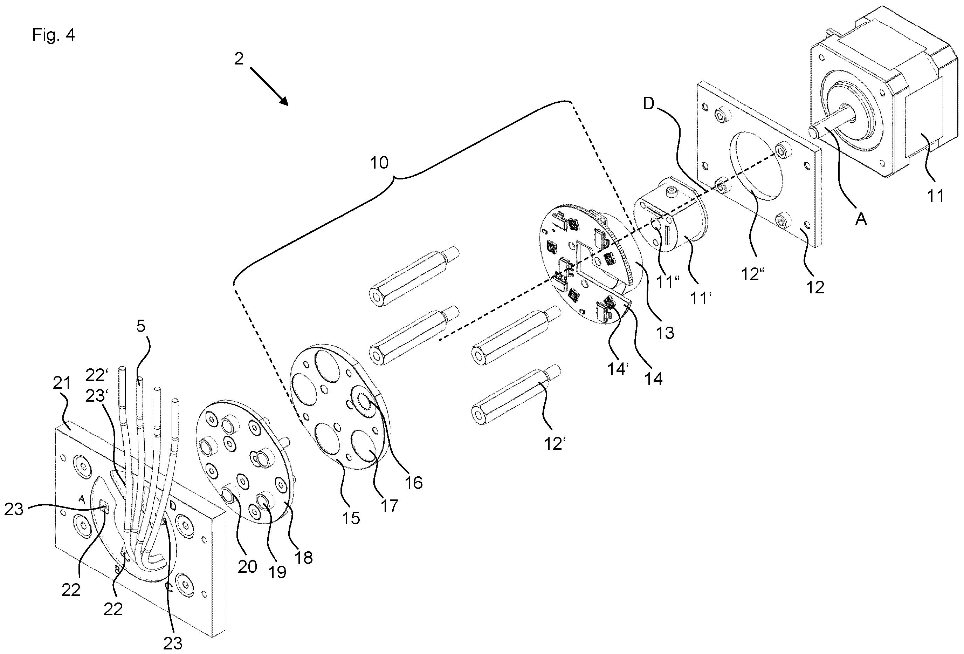

Die Anregungseinheit 2 weist, wie in **Fig. 3** und **4** dargestellt, einen Schrittmotor 11 auf, der eine Antriebsachse A hat. Der Schrittmotor 11 ist an einer Verbindungsplatte 12 befestigt, die ihrerseits über vier Abstandshalter 12' mit einer Halteplatte 21 verbunden ist, wobei die Abstandshalter 12' alle die gleiche Länge haben, sodass die Verbindungsplatte 12 und die Halteplatte 21 parallel zueinander sind. Die Halteplatte 21 ist in dem Gehäuse 9 mit der Halteplatte 8" verbunden und damit die Anregungseinheit 2 im Gehäuse 9 befestigt. Die Drehachse A ragt durch eine kreisförmige Öffnung 12" und ist mit einem mit der Drehachse A drehbar gelagerten Trägerrad 14 verbunden. Der Schrittmotor 11 kann in einer Dreheinstellung das Trägerrad 14 inkrementweise in eine vorbestimmte Richtung drehen, sodass das Trägerrad 14 verschiedene Drehwinkelstellungen einnimmt. Nachdem das Trägerrad 14 die letzte Drehwinkelstellung eingenommen hat, wird es wieder in die Ausgangsposition zurückgefahren (vollführt also eine 4/5 bzw. 288°-Umdrehung). Das Trägerrad 14 ist als Platine ausgestaltet und weist einen spiralförmig gedrehten, flexiblen Platinenabschnitt 13 auf, mit der eine Verbindung mit einer Steuerungselektronik (figurativ nicht dargestellt) ermöglicht wird und das Trägerrad 14 mindestes in eine Richtung um eine volle Drehung gedreht werden kann. Der Platinenabschnitt 13 sowie das Trägerrad 14 sind mit einem Verbindungsbauteil 11' verbunden, das eine Öffnung 11" für die Achse A aufweist und somit die Verbindung zum Schrittmotor 11 bereitstellt.

Das drehbare Trägerrad 14 weist fünf auf dem Trägerrad 14 rotationssymmetrisch angeordnete LEDs 14' auf; die LEDs sind auf einer Kreislinie um eine Drehachse D des Trägerrads 14 angeordnet; die LEDs sind gleichmäßig auf dieser Kreislinie verteilt. Die Mitte des Trägerrades 14 definiert die Drehachse D des Trägerrades 14, wobei die Drehachse D mit der Drehachse A des Schrittmotors 11 übereinstimmt. An dem Trägerrad 14 auf der von dem Schrittmotor 11 abgewandten Seite ist eine kreisförmige Filterscheibe 15 befestigt. Die Filterscheibe 15 weist fünf rotationssymmetrisch angeordnete Filteröffnungen 16 auf, in denen fünf Farbfilter 17 eingesetzt, und zwar in den Farben gelb, grün, blau, rot und violett. Die Filteröffnungen 16 bzw. die Farbfilter 17 sind auf einer Kreislinie angeordnet, die der Kreislinie entspricht, auf der die LEDs 14' angeordnet sind, sodass die Farbfilter 17 im optischen Strahlengang der LEDs 14' zu liegen kommen. Trägerrad 14 und Filterscheibe 15 bilden zusammen eine Filterrad-LED-Anordnung 10, die drehbar in der Anregungseinheit 2 gelagert ist.

Zwischen der Filterscheibe 15 und der Halteplatte 21 ist ferner eine Kollimatorscheibe 18 angeordnet. Diese ist mit der Filterscheibe 15 und dem Trägerrad 14 drehfest verbunden. Die Kollimatorscheibe 18 hat fünf ebenfalls rotationssymmetrisch angeordnete Linsenöffnungen mit optischen Linsen 19, die den Strahlengang der LEDs 14' kollimieren. Alternativ kann die Kollimatorscheibe 18 auch nur Öffnungen ohne Linsen aufweisen, um damit die Filterscheibe 15 zu fixieren und Lichttunnel für die Strahlengänge der LEDs zu erzeugen und sie zu zentrieren. Durch die Kollimatorscheibe 18 wird der Strahlengang der LEDs 14'auf die Halteplatte 21 gelenkt. Die Halteplatte 21 weist vier Anschlussplätze 22 und einen Referenzanschlussplatz 22` auf, auf die die Strahlengänge der LEDs 14' von der Kollimatorscheibe 18 gerichtet sind.

Der Referenz-Anschlussplatz 22` und die vier Anschlussplätze 22 sind, wie auch schon die Farbfilter 17 und die Kollimatorlinsen 19, rotationssymmetrisch korrespondierend zu den LEDs 14' angeordnet. Dadurch wird ausgehend von den LEDs bis zu den Anschlussplätzen 22,22` ein durchgängiger Strahlengang gebildet.

Der Referenz-Anschlussplatz 22' weist eine Referenz-Anschlussöffnung 23` auf, in die der Referenz-Lichtwellenleiter 7 eingesetzt ist (siehe Fig. 1). An den vier Anschlussplätzen 22 ist jeweils ein Bündel Lichtwellenleiter eingesetzt; jedes Bündel hat vier erste Lichtwellenleiter 5, deren Eingangsseiten an jeweilige Anschlussöffnungen 23 passen. Pro Anschlussplatz 22 sind vier Anschlussöffnungen 23 vorgesehen. Jeder Anschlussplatz 22 ist einer LED 14' und damit einer Farbe (Farbfilter 17) zugeordnet.

Der Schrittmotor 11 ermöglicht ein schrittweises Drehen der Filterrad-LED-Anordnung 10. Bei fünf LEDs entspricht dies einem 72° Winkelinkrement. Durch diese Drehmöglichkeit wird ein Anschlussplatz 22 mit einer Farbe bestrahlt und dadurch die jeweiligen Anschlussöffnungen 23 für die ersten Lichtwellenleiter 5. In **Fig. 1****,** **3** und **4** bedeutet dies eine Farbe für vier erste Lichtwellenleiter 5 und somit vier Proben in dem Probenhalter 30.

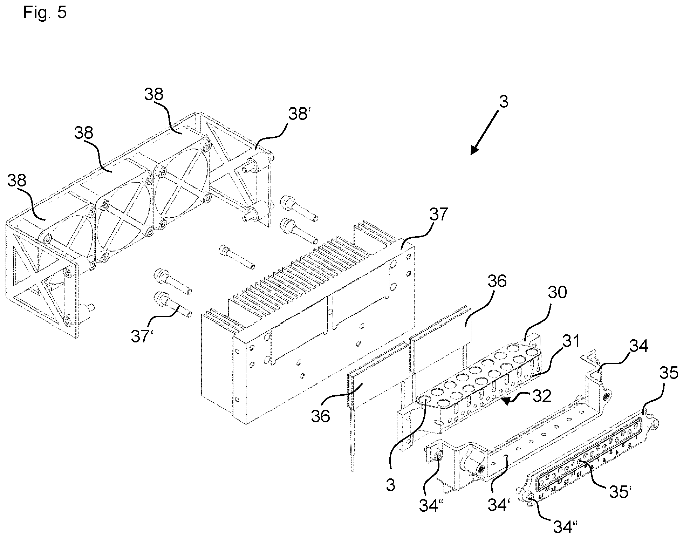

Die Probenhaltereinheit 3 weist in **Fig. 5** einen Probenhalter 30 als Vollkörper auf, in den 16 Probenaufnahmen 33 als Ausnehmungen 33 eingebracht sind. Die Probenaufnahmen 33 öffnen sich in Fig. 5 nach oben und sind zur Seite (rechts vorne in Fig. 5) mit jeweils einer Emissionsöffnung 31, in die die Eingangsseite des jeweiligen zweiten Lichtwellenleiters 6 (siehe Fig. 1 und 3) aufgenommen werden kann, verbunden. Ferner sind die Probenaufnahmen 33 mit der gleichen Anzahl Anregungsöffnungen 32 (in Fig. 5 vom Probenhalter 30 nach unten weisend) verbunden, in die die Ausgangsseite des jeweiligen ersten Lichtwellenleiters 5 eingesetzt werden kann. Die Seite des Probenhalters 30, in der die Emissionsöffnungen 31 vorliegen, ist orthogonal zu der Seite des Probenhalters 30, in der die Anregungsöffnungen 32 vorliegen. Damit sind die Emissionsöffnungen 31 zu den Anregungsöffnungen 32 auch in einem 90°-Winkel in dem Probenhalter 30 zueinander angeordnet.

Der Probenhalter 30 ist in eine Isolierhalterung 34 eingesetzt, die der Form des Probenhalters nachgeformt ist und nur im Wesentlichen die Anregungsöffnungen 32 abdeckt. Die Isolierhalterung 34 bietet Befestigungsmittel 34" mit denen die Probenhalterung 30 an den weiteren Komponenten der Probenhaltereinheit 3 und der Halteplatte 8" in dem Gehäuse 9 befestigt ist. Die Isolierhalterung 34 weist ferner Anschlussöffnungen 34` auf, in die die Ausgangsseiten der ersten Lichtwellenleiter 5 eingesteckt werden, und ist mit dem Kühlrippenelement 37 verschraubt, wie in **Fig. 5** dargestellt. Die Anschlussöffnungen 34` fluchten dabei mit Anregungsöffnungen 32 und dienen als Führung für die jeweiligen Lichtwellenleiter 5. Dem Probenhalter 30 ist eine weitere Isolierplatte 35 vorgeordnet, in der Anschlussöffnungen 35` eingebracht sind, in die die Eingangsseite der zweiten Lichtwellenleiter 6 eingesteckt werden. Die Anschlussöffnungen 35` fluchten dabei mit den Emissionsöffnungen 31 und dienen als Führung für die jeweiligen Lichtwellenleiter 6. Die Isolierplatte 35 ist über die Befestigungsmittel 34" mit der Isolierhalterung 34 verbunden.

Die Probenhaltereinheit 3 weist ferner zwei Peltier-Elemente 36 auf, die an einer Längsseite des Probenhalters 30 angeordnet sind. Benachbart zu den zwei Peltier-Elementen 36 ist ein Kühlkörperelement 37 in Form eines Kühlrippenelement 37 als angeordnet, an dem ein Rahmen 38` mit drei nebeneinander angeordneten Lüftern 38 befestigt ist. Der Rahmen 38` ist mit dem Kühlrippenelement 37 über Befestigungsmittel 37` verbunden. Die Peltier-Elemente 36 werden dabei zwischen Kühlrippenelement 37 und Probenhalter 30 eingeklemmt.

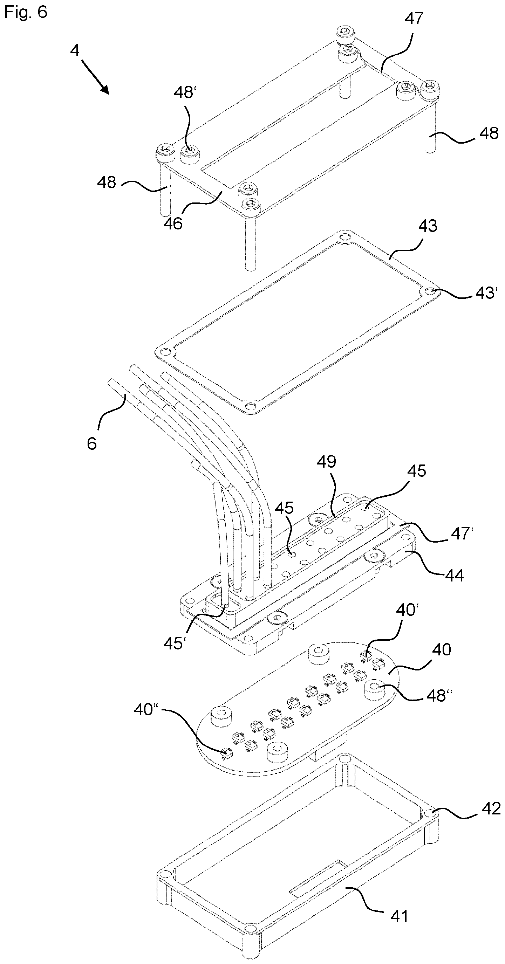

Die Detektoreinheit 4 weist in **Fig. 6** einen quaderförmigen Gehäusekörper 41 auf. In dem Gehäusekörper 41 ist eine Platine 40 aufgehängt, auf der insgesamt 16 Photosensoren 40` und ein Referenz-Photosensor 40" angeordnet sind. Mit der Platine 40 ist eine weitere Anschlussplatte 44 mittels Schrauben 48` befestigt, die in Gewindestutzen 48" auf der Platine 40 eingedreht werden, sodass die Platine 40 an einem Gehäusedeckel 46 aufgehängt ist. Auf der Anschlussplatte 44 liegen Anschlussöffnungen 45 zum Anschluss der zweiten Lichtwellenleiter 6 sowie eine Referenz-Anschlussöffnung 45` vor, wobei die Anschlussöffnungen 45 mit der Position der Photosensoren 40` auf der Platine 40 fluchten. Die Anschlussöffnungen 45 dienen somit nicht nur als Steckplätze, sondern auch als Führung für die zweiten Lichtwellenleiter 6. Damit kann Licht aus den zweiten Lichtwellenleitern 6 direkt auf die Photosensoren 40` geleitet werden und eine optische Signalübertragung ohne Signalverlust ermöglicht werden. Um die Anschlussöffnungen 45 und die Referenz-Anschlussöffnung 45` ist ein rechteckiger Rahmen 49 für die Anschlussöffnungen 45 gebildet, um sicherzustellen, dass der Kleber, der für die Befestigung der Lichtwellenleiter verwendet wird, an Ort und Stelle verbleibt.

Der Gehäusekörper 41 wird mit Schrauben 48 mit dem Gehäusedeckel 46 verschraubt, wofür der Gehäusekörper 41 in jeder Ecke eine Befestigungsbohrung 42 aufweist. Zwischen Gehäusekörper 41 und Gehäusedeckel 46 ist eine Dichtung 43 angeordnet, die Durchgangsöffnungen 43` hat, die mit den Befestigungsbohrungen 42 fluchtet. Der Gehäusekörper 41 weist eine rechteckige Durchgangsöffnung 47 auf, deren Abmessungen mit denen des Rahmens 49 der Anschlussplatte 45 übereinstimmen. In der Durchgangsöffnung 47 ist eine weitere Dichtung 47` angeordnet, die den Rahmen 49 umgibt und auf der Anschlussplatte 44 aufliegt. Durch die Dichtungen 43, 47` wird die Platine 40 vor Feuchtigkeit geschützt. Das Gehäuse 9 beherbergt auf dem Gehäuseboden 8 weitere Elektronikkomponenten (figurativ nicht dargestellt), wie eine Datenverarbeitungseinheit, Kommunikationseinheit und weitere Steuerungselektronik für die Anregungseinheit 2, die Heizeinheit 50 und die Detektoreinheit 4.

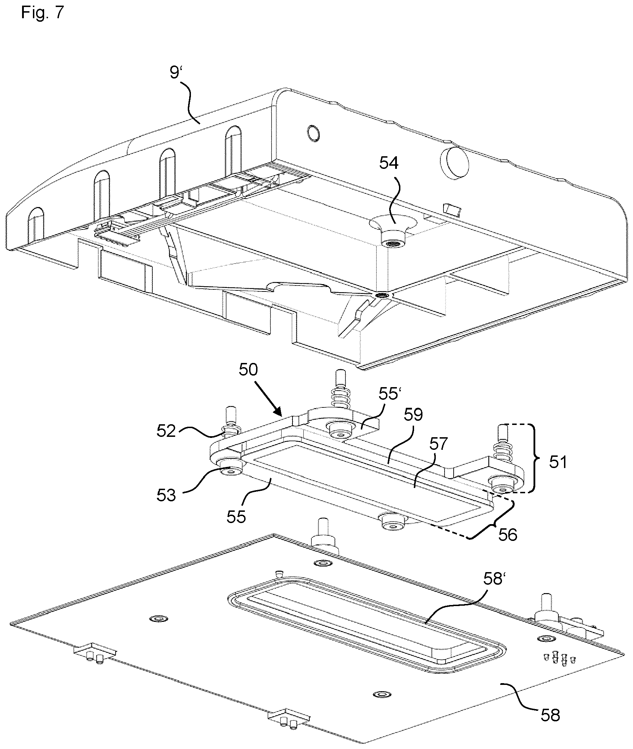

In **Fig. 7** ist das Innere des Gehäusedeckels 9` des Gehäuses 9 der Vorrichtung 1 dargestellt. Der Gehäusedeckel 9` haust eine federnde Aufhängung 51 einer Heizeinheit 50, die bei geschlossenem Gehäusedeckel 9` auf dem Probenhalter 30 zu liegen kommt. Sie weist ein Heizelement 56 auf, das in geschlossenem Zustand des Gehäusedeckel 9` auf die Oberseite des Probenhalters 30 aufgepresst wird. Das Heizelement 56 ist flächig und aus zwei Schichten aufgebaut: Einer dem Gehäusedeckel 9` zugewandten Isolierschicht 59 und einer dem Probenhalter 30 zugewandten Heizschicht 57, die aus einer Platine mit darauf angeordneten flächigen Heizelementen besteht. Optional kann eine zusätzliche Wärmeleitschicht zwischen Heizschicht 57 und Isolierschicht 59 vorgesehen sein. Das Heizelement ist mittig auf einer rechteckigen Platte 55 angeordnet, die an ihren vier Ecken die federnde Aufhängung 51 umfasst. An den vier Ecken der Platte 55 sind über eine Stufe Aufhängungsplattenelemente 55` angeformt, die über jeweils eine Schraube 53 mit einer mit der Innenseite des Gehäusedeckels 9` Basis 54 verbunden sind. Zwischen der Basis 54 und dem Aufhängungsplattenelement 55` ist die Schraube 53 in einer Feder 52 eingesetzt, um die federnde Aufhängung 51 zu bilden. Das Heizelement 56 wird in einer entsprechend dem Heizelement 56 bemessenen Ausnehmung 58` von einer Abdeckplatte 58 gefasst und das Innere des Gehäusedeckels 9` abgedeckt.

### BEZUGSZEICHENLISTE

- 1: Vorrichtung
- 2: Anregungseinheit
- 3: Probenhaltereinheit
- 4: Detektoreinheit
- 5: Erste Lichtwellenleiter
- 6: Zweite Lichtwellenleiter
- 7: Referenz-Lichtwellenleiter
- 8: Bodenplatte
- 8`: Gehäuseteil
- 8": Halteplatte
- 9: Gehäuse
- 9`: Gehäusedeckel
- 9": Verriegelung
- 10: Filterrad-LED-Anordnung
- 11: Schrittmotor
- 11': Verbindungsbauteil
- 11": Öffnung
- 12: Verbindungsplatte
- 12': Abstandshalter
- 12": Durchgangsöffnung
- 13: Spiral-/Rückstellfeder
- 14: Trägerrad für LEDs
- 14': LED
- 15: Filterscheibe
- 16: Durchgangsöffnung
- 17: Farbfilter
- 18: Kollimatorscheibe
- 19: Optische Linse
- 20: Durchgangsöffnungen
- 21: Halteplatte
- 22: Anschlussplatz
- 22`: Referenzanschlussplatz
- 23: Anschlussöffnungen für erste Lichtwellenleiter
- 23`: Anschlussöffnung für Referenz-Lichtwellenleiter
- 30: Probenhalter
- 31: Emissionsöffnung
- 32: Anregungssöffnung
- 33: Probenaufnahme
- 34: Isolierhalterung
- 34`: Anschlussöffnung für erste Lichtwellenleiter
- 34": Befestigungsmittel
- 35: Isolierplatte
- 35`: Anschlussöffnung für zweite Lichtwellenleiter
- 36: Temperierelement/Peltier-Element
- 37: Kühlrippenelement
- 37`: Befestigungsmittel
- 38: Lüfter
- 38`: Rahmen
- 40: Platine
- 40`: Photosensoren
- 40": Referenz-Photosensor
- 41: Detektorgehäuse
- 42: Befestigungsöffnungen
- 43: Dichtung
- 43`: Durchgangsöffnung
- 44: Anschlussplatte
- 45: Anschlussöffnungen für zweite Lichtwellenleiter
- 45: Anschlussöffnung für Referenz-Lichtwellenleiter
- 46: Detektor-Gehäusedeckel
- 47: Durchgangsöffnung
- 47`: Dichtung Durchgangsöffnung
- 48: Schraube
- 48`: Schraube
- 48": Gewindestutzen
- 49: Rahmen
- 50: Heizeinheit
- 51: Gefederte Aufhängung
- 52: Federn
- 53: Schraube
- 54: Basis
- 55: Platte
- 55`: Aufhängungsplattenelement
- 56: Heizelement
- 57: Platine mit Heizelementen
- 58: Abdeckplatte
- 58`: Ausnehmung Abdeckplatte
- 59: Isolierung

- A: Achse Schrittmotor
- D: Drehachse

## Patentansprüche

1. Vorrichtung zur Lumineszenzdetektion für temperaturabhängige Reaktionssysteme mit
- einer Anregungseinheit (2), die ein drehbares Trägerrad (14) mit zumindest zwei daran rotationssymmetrisch angeordneten LEDs (14`) und eine Halteplatte (21) mit einem Referenz-Anschlussplatz (22`) und zumindest einem Anschlussplatz (22) aufweist, die rotationssymmetrisch korrespondierend zu den LEDs (14`) angeordnet sind, wobei das Trägerrad (14) entsprechend einer Anzahl der LEDs (14`) in zumindest zwei Drehwinkelstellungen anordenbar ist, in denen ein Strahlengang jeweils einer der zumindest zwei LEDs (14`) auf den Referenz-Anschlussplatz (22`) und ein Strahlengang der zumindest einen weiteren LED (14`) auf den zumindest einen Anschlussplatz (22) trifft, und wobei die Anregungseinheit (2) einen Referenz-Lichtwellenleiter (7) und zumindest ein Lichtwellenleiter-Bündel aus einer Anzahl erster Lichtwellenleiter (5) aufweist, wobei der Referenz-Lichtwellenleiter (7) mit seiner Eingangsseite an dem Referenz-Anschlussplatz (22`) und das zumindest eine Lichtwellenleiter-Bündel mit einer Eingangsseite der ersten Lichtwellenleiter (5) an dem zumindest einen Anschlussplatz (22) angeordnet sind,
- einer Probenhaltereinheit (3), die einen Probenhalter (30) mit einer Mehrzahl Probenaufnahmen (33) aufweist, die einer summierten Anzahl der ersten Lichtwellenleiter (5) des zumindest einen Lichtwellenleiter-Bündels entspricht, wobei jeder erste Lichtwellenleiter (5) mit einer Ausgangseite an jeweils einer der Probenaufnahmen (33) angeordnet ist,
- einer Detektoreinheit (4), die einen Referenz-Photosensor (40") und eine Mehrzahl Photosensoren (40`) und eine Mehrzahl an zweiten Lichtwellenleitern (6) aufweist, die der Mehrzahl der Probenaufnahmen (33) entspricht, wobei der Referenz-Lichtwellenleiter (7) mit seiner Ausgangsseite an dem Referenz-Photosensor (40") und jeder zweite Lichtwellenleiter (6) mit einer Ausgangsseite an jeweils einem der Photosensoren (40`) und mit einer Eingangsseite an jeweils einer der Probenaufnahmen (33) angeordnet ist.

2. Vorrichtung nach Anspruch 1, wobei
die LEDs (14`) das gleiche Emissionsspektrum aufweisen und zwischen den LEDs (14`) und der Halteplatte (21) eine Filterscheibe (15) angeordnet ist, die mit dem Trägerrad (14) drehfest verbunden ist und entsprechend der Anzahl der LEDs (14`) zumindest zwei rotationssymmetrisch angeordnete Filteröffnungen (16) aufweist, in denen unterschiedliche optische Filter (17) im Strahlengang der LEDs (14`) aufgenommen sind,

3. Vorrichtung nach Anspruch 1 oder 2, wobei
die Vorrichtung ein Gehäuse (9) mit einem Gehäusedeckel (9`) aufweist, wobei die Anregungseinheit (2), die Probenhaltereinheit (3) und die Detektoreinheit (4) in dem Gehäuse (9) angeordnet sind, und die Probenaufnahmen (33) des Probenhalters (30) in einer Offenstellung des Gehäusedeckels (9`) zugänglich sind,
und wobei die Vorrichtung eine Heizeinheit (50) aufweist, die auf einer Innenseite des Gehäusedeckels (9`) angeordnet und dazu ausgebildet ist, in einer Schließstellung des Gehäusedeckels (9`) mit dem Probenhalter (30) in thermische Wirkverbindung zu treten.

4. Vorrichtung nach Anspruch 3, wobei
die Heizeinheit (50) mittels einer federnden Aufhängung (51) in dem Gehäusedeckel (9`) angeordnet ist, die dazu ausgebildet ist, die Heizeinheit (50), in der Schließstellung des Gehäusedeckels (9`) auf den Probenhalter (30) zu pressen,
und wobei die Heizeinheit (50) ein flächiges Heizelement (56) aufweist, das bevorzugt aus zumindest zwei Schichten aufgebaut ist, die eine in der Schließstellung des Gehäusedeckels (9`) dem Probenhalter (30) zugewandte Heizschicht (57) und eine dem Gehäusedeckel (9`) zugewandte Isolierschicht (59) aufweisen.

5. Vorrichtung nach zumindest einem der Ansprüche 1 bis 4, wobei
der Probenhalter (30) aus einem wärmeleitfähigen Material als Vollkörper gefertigt ist und jede Probenaufnahme (33) durch eine Ausnehmung (33) gebildet wird, die zu einer ersten Seite des Probenhalters (30) geöffnet ist und mit jeweils einer Emissionsöffnung (31) zur Aufnahme der Eingangsseite des jeweiligen zweiten Lichtwellenleiters (6) und mit jeweils einer Anregungsöffnung (32) zur Aufnahme der Ausgangsseite des jeweiligen ersten Lichtwellenleiters (5) verbunden ist, und
wobei die Emissionsöffnungen (31) an einer zweiten Seite des Probenhalters (30) ausgebildet sind, die bevorzugt orthogonal zu der ersten Seite steht, und die Anregungsöffnungen (32) an einer dritten, von der ersten Seite abgewandten Seite des Probenhalters (30) ausgebildet sind.

6. Vorrichtung nach Anspruch 5, wobei
die Probenhaltereinheit (3) zumindest ein Temperierelement (36) aufweist, das bevorzugt ein Peltier-Element (36) ist, wobei das zumindest eine Temperierelement (36) an einer vierten, von der zweiten Seite abgewandten Seite des Probenhalters (30) angeordnet und thermisch mit dem Probenhalter (30) verbunden ist.

7. Vorrichtung nach Anspruch 6, wobei
die Probenhaltereinheit (3) ferner ein Kühlkörperelement (37) und/oder zumindest einen Lüfter (38) aufweist, wobei das Kühlkörperelement (37) und/oder der zumindest eine Lüfter (38) an einer von dem Probenhalter (30) abgewandten Seite des zumindest einen Temperierelement (36) angeordnet ist und mit dem zumindest einen Temperierelement (36) in thermischer Wirkverbindung steht, wobei bevorzugt das Kühlkörperelement (37) mit dem zumindest einen Temperierelement (36) verbunden ist und der zumindest eine Lüfter (38) an einer von dem Temperierelement (36) abgewandten Seite des Kühlkörperelement (37) angeordnet ist

8. Vorrichtung nach zumindest einem der Ansprüche 1 bis 7, wobei
die Anregungseinheit (2) zumindest drei, vier oder fünf rotationssymmetrisch auf dem Trägerrad (14) angeordnete LEDs (14`) und an der Halteplatte (21) zumindest zwei, drei oder vier Anschlussplätze (22) aufweist, wobei das Trägerrad (14) in zumindest drei, vier oder fünf Drehwinkelstellungen anordenbar ist, in denen der Strahlengang jeweils einer der zumindest drei, vier oder fünf LEDs (14`) auf den Referenz-Anschlussplatz (22`) und der Strahlengang der zumindest zwei, drei oder vier weiteren LEDs (14`) auf die Anschlussplätze (22) trifft, und
die Anregungseinheit (2) zumindest zwei, drei oder vier Lichtwellenleiter-Bündel aus den ersten Lichtwellenleitern (5) aufweist, die mit der Eingangsseite an den zumindest zwei, drei oder vier Anschlussplätzen (22) angeordnet sind.

9. Vorrichtung nach zumindest einem der Ansprüche 2 bis 8, wobei
zwischen der Filterscheibe (15) und der Halteplatte (21) eine Kollimatorscheibe (18) angeordnet ist, die mit der Filterscheibe (15) und/oder dem Trägerrad (14) drehfest verbunden ist und entsprechend der Anzahl der LEDs (14`) zumindest zwei rotationssymmetrisch in Linsenöffnungen (20) angeordnete optische Linsen (19) aufweist, die den Strahlengang der zumindest zwei LEDs (14`) jeweils auf den Referenzanschlussplatz (22`) und den zumindest einen Anschlussplatz (22) lenken.

10. Vorrichtung nach zumindest einem der Ansprüche 1 bis 9, wobei
der Referenz-Anschlussplatz (22`) eine Anschlussöffnung (23`) ist und der zumindest eine Anschlussplatz (22) durch eine Anzahl an Anschlussöffnungen (23) gebildet wird, die der Anzahl der ersten Lichtwellenleiter (5) des zumindest einen Lichtwellenleiter-Bündels entspricht,
und/oder
die Anzahl der ersten Lichtwellenleiter (5) des zumindest einen Lichtwellenleiter-Bündels zumindest zwei oder drei oder vier beträgt.

11. Vorrichtung nach zumindest einem der Ansprüche 5 bis 10, wobei
die Probenhaltereinheit (3) eine Isolierhalterung (34) mit Anschlussöffnungen (34`) für die ersten Lichtwellenleiter (5) und eine Isolierplatte (35) mit Anschlussöffnungen (35`) für die zweiten Lichtwellenleiter (6) aufweist, wobei
die Isolierhalterung (34) und die Isolierplatte (35) miteinander verbunden sind, und die Anschlussöffnungen (34`) der Isolierhalterung (34), die an der dritten Seite des Probenhalters (30) angeordnet ist, mit den Anregungsöffnungen (32) des Probenhalters (30) fluchten, und
die Anschlussöffnungen (35`) der Isolierplatte (35), die an der zweiten Seite des Probenhalters (30) angeordnet ist, mit den Emissionsöffnungen (31) des Probenhalters (30) fluchten.

12. Vorrichtung nach zumindest einem der Ansprüche 1 bis 11, wobei
die Detektoreinheit (4) eine Platine (40), auf der die Mehrzahl der Photosensoren (40`) und der Referenz-Photosensor (40") angeordnet sind, und eine Anschlussplatte (44) mit Anschlussöffnungen (45) für die zweiten Lichtwellenleiter (6) und den Referenz-Lichtwellenleiter (7) aufweist, wobei die Anschlussöffnungen (45) in der Anschlussplatte (40) korrespondierend zu der Mehrzahl der Photosensoren (40`) und dem Referenz-Photosensor (40") auf der Platine (40) angeordnet sind, sodass ein Strahlengang von der Ausgangsseite jedes zweiten Lichtwellenleiters (6) auf einen der Photosensoren (40`) und ein Strahlengang von der Ausgangsseite des Referenz-Lichtwellenleiters (7) auf den Referenz-Photosensor (40") trifft.

13. Vorrichtung nach Anspruch 12, wobei
die Detektoreinheit (4) ein Detektorgehäuse (41), in dem die Platine (40) mit den Photosensoren (40`) und dem Referenz-Photosensor (40") befestigt ist, und einen Detektor-Gehäusedeckel (47) aufweist, der mit dem Detektorgehäuse (41) abdichtend verbunden ist und eine Durchgangsöffnung (47) aufweist, in der ein Rahmen (49), der die Anschlussöffnungen (45, 45`) an der Anschlussplatte (44) umgibt, aufgenommen ist.

14. Vorrichtung nach zumindest einem der Ansprüche 1 bis 13, wobei
die Anregungseinheit (2) einen Schrittmotor (11) mit einer Antriebsachse (A) aufweist, die mit dem Trägerrad (14) verbunden ist, wobei der Schrittmotor (11) dazu ausgebildet ist, das Trägerrad (14) in den zumindest zwei Drehwinkelstellungen anzuordnen, wobei
- der Schrittmotor (11) dazu ausgebildet ist, das Trägerrad (14) in einer ersten Drehrichtung zu bewegen,
und/oder
- der Schrittmotor (11) an einer Verbindungsplatte (12) befestigt ist, die eine Öffnung aufweist, durch die sich die Antriebsachse (A) des Schrittmotors (11) erstreckt, wobei die Halteplatte (21) parallel und beabstandet zu der Verbindungsplatte (12) angeordnet und zur Ausrichtung in Bezug auf die Antriebsachse (A) mit der Verbindungsplatte (12) durch zumindest ein Abstandshalterelement (12`) verbunden ist.

15. Vorrichtung nach zumindest einem der Ansprüche 1 bis 14, wobei
die ersten Lichtwellenleiter (5), die zweiten Lichtwellenleiter (6) und der Referenz-Lichtwellenleiter (7) einen optischen Kern aus Kunststoff aufweisen.

## Geänderte Patentansprüche

### Geänderte Patentansprüche gemäss Regel 137(2) EPÜ.

1. Vorrichtung zur Lumineszenzdetektion für temperaturabhängige Reaktionssysteme mit
- einer Anregungseinheit (2), die ein drehbares Trägerrad (14) mit zumindest zwei daran rotationssymmetrisch angeordneten LEDs (14') und eine Halteplatte (21) mit einem Referenz-Anschlussplatz (22') und zumindest einem Anschlussplatz (22) aufweist, die rotationssymmetrisch korrespondierend zu den LEDs (14') angeordnet sind, wobei das Trägerrad (14) entsprechend einer Anzahl der LEDs (14') in zumindest zwei Drehwinkelstellungen anordenbar ist, in denen ein Strahlengang jeweils einer der zumindest zwei LEDs (14') auf den Referenz-Anschlussplatz (22') und ein Strahlengang der zumindest einen weiteren LED (14') auf den zumindest einen Anschlussplatz (22) trifft, und wobei die Anregungseinheit (2) einen Referenz-Lichtwellenleiter (7) und zumindest ein Lichtwellenleiter-Bündel aus einer Anzahl erster Lichtwellenleiter (5) aufweist, wobei der Referenz-Lichtwellenleiter (7) mit seiner Eingangsseite an dem Referenz-Anschlussplatz (22') und das zumindest eine Lichtwellenleiter-Bündel mit einer Eingangsseite der ersten Lichtwellenleiter (5) an dem zumindest einen Anschlussplatz (22) angeordnet sind,
- einer Probenhaltereinheit (3), die einen Probenhalter (30) mit einer Mehrzahl Probenaufnahmen (33) aufweist, die einer summierten Anzahl der ersten Lichtwellenleiter (5) des zumindest einen Lichtwellenleiter-Bündels entspricht, wobei jeder erste Lichtwellenleiter (5) mit einer Ausgangseite an jeweils einer der Probenaufnahmen (33) angeordnet ist,
- einer Detektoreinheit (4), die einen Referenz-Photosensor (40") und eine Mehrzahl Photosensoren (40') und eine Mehrzahl an zweiten Lichtwellenleitern (6) aufweist, die der Mehrzahl der Probenaufnahmen (33) entspricht, wobei der Referenz-Lichtwellenleiter (7) mit seiner Ausgangsseite an dem Referenz-Photosensor (40") und jeder zweite Lichtwellenleiter (6) mit einer Ausgangsseite an jeweils einem der Photosensoren (40') und mit einer Eingangsseite an jeweils einer der Probenaufnahmen (33) angeordnet ist, und
wobei die LEDs (14') das gleiche Emissionsspektrum aufweisen und zwischen den LEDs (14') und der Halteplatte (21) eine Filterscheibe (15) angeordnet ist, die mit dem Trägerrad (14) drehfest verbunden ist und entsprechend der Anzahl der LEDs (14') zumindest zwei rotationssymmetrisch angeordnete Filteröffnungen (16) aufweist, in denen unterschiedliche optische Filter (17) im Strahlengang der LEDs (14') aufgenommen sind.

2. Vorrichtung nach Anspruch 1, wobei
die Vorrichtung ein Gehäuse (9) mit einem Gehäusedeckel (9') aufweist, wobei die Anregungseinheit (2), die Probenhaltereinheit (3) und die Detektoreinheit (4) in dem Gehäuse (9) angeordnet sind, und die Probenaufnahmen (33) des Probenhalters (30) in einer Offenstellung des Gehäusedeckels (9') zugänglich sind,
und wobei die Vorrichtung eine Heizeinheit (50) aufweist, die auf einer Innenseite des Gehäusedeckels (9') angeordnet und dazu ausgebildet ist, in einer Schließstellung des Gehäusedeckels (9') mit dem Probenhalter (30) in thermische Wirkverbindung zu treten.

3. Vorrichtung nach Anspruch 2, wobei
die Heizeinheit (50) mittels einer federnden Aufhängung (51) in dem Gehäusedeckel (9') angeordnet ist, die dazu ausgebildet ist, die Heizeinheit (50), in der Schließstellung des Gehäusedeckels (9') auf den Probenhalter (30) zu pressen,
und wobei die Heizeinheit (50) ein flächiges Heizelement (56) aufweist, das bevorzugt aus zumindest zwei Schichten aufgebaut ist, die eine in der Schließstellung des Gehäusedeckels (9') dem Probenhalter (30) zugewandte Heizschicht (57) und eine dem Gehäusedeckel (9') zugewandte Isolierschicht (59) aufweisen.

4. Vorrichtung nach zumindest einem der Ansprüche 1 bis 3, wobei
der Probenhalter (30) aus einem wärmeleitfähigen Material als Vollkörper gefertigt ist und jede Probenaufnahme (33) durch eine Ausnehmung (33) gebildet wird, die zu einer ersten Seite des Probenhalters (30) geöffnet ist und mit jeweils einer Emissionsöffnung (31) zur Aufnahme der Eingangsseite des jeweiligen zweiten Lichtwellenleiters (6) und mit jeweils einer Anregungsöffnung (32) zur Aufnahme der Ausgangsseite des jeweiligen ersten Lichtwellenleiters (5) verbunden ist, und wobei die Emissionsöffnungen (31) an einer zweiten Seite des Probenhalters (30) ausgebildet sind, die bevorzugt orthogonal zu der ersten Seite steht, und die Anregungsöffnungen (32) an einer dritten, von der ersten Seite abgewandten Seite des Probenhalters (30) ausgebildet sind.

5. Vorrichtung nach Anspruch 4, wobei
die Probenhaltereinheit (3) zumindest ein Temperierelement (36) aufweist, das bevorzugt ein Peltier-Element (36) ist, wobei das zumindest eine Temperierelement (36) an einer vierten, von der zweiten Seite abgewandten Seite des Probenhalters (30) angeordnet und thermisch mit dem Probenhalter (30) verbunden ist.

6. Vorrichtung nach Anspruch 5, wobei
die Probenhaltereinheit (3) ferner ein Kühlkörperelement (37) und/oder zumindest einen Lüfter (38) aufweist, wobei das Kühlkörperelement (37) und/oder der zumindest eine Lüfter (38) an einer von dem Probenhalter (30) abgewandten Seite des zumindest einen Temperierelement (36) angeordnet ist und mit dem zumindest einen Temperierelement (36) in thermischer Wirkverbindung steht, wobei bevorzugt das Kühlkörperelement (37) mit dem zumindest einen Temperierelement (36) verbunden ist und der zumindest eine Lüfter (38) an einer von dem Temperierelement (36) abgewandten Seite des Kühlkörperelement (37) angeordnet ist

7. Vorrichtung nach zumindest einem der Ansprüche 1 bis 6, wobei
die Anregungseinheit (2) zumindest drei, vier oder fünf rotationssymmetrisch auf dem Trägerrad (14) angeordnete LEDs (14') und an der Halteplatte (21) zumindest zwei, drei oder vier Anschlussplätze (22) aufweist, wobei das Trägerrad (14) in zumindest drei, vier oder fünf Drehwinkelstellungen anordenbar ist, in denen der Strahlengang jeweils einer der zumindest drei, vier oder fünf LEDs (14') auf den Referenz-Anschlussplatz (22') und der Strahlengang der zumindest zwei, drei oder vier weiteren LEDs (14') auf die Anschlussplätze (22) trifft, und
die Anregungseinheit (2) zumindest zwei, drei oder vier Lichtwellenleiter-Bündel aus den ersten Lichtwellenleitern (5) aufweist, die mit der Eingangsseite an den zumindest zwei, drei oder vier Anschlussplätzen (22) angeordnet sind.

8. Vorrichtung nach zumindest einem der Ansprüche 1 bis 7, wobei
zwischen der Filterscheibe (15) und der Halteplatte (21) eine Kollimatorscheibe (18) angeordnet ist, die mit der Filterscheibe (15) und/oder dem Trägerrad (14) drehfest verbunden ist und entsprechend der Anzahl der LEDs (14') zumindest zwei rotationssymmetrisch in Linsenöffnungen (20) angeordnete optische Linsen (19) aufweist, die den Strahlengang der zumindest zwei LEDs (14') jeweils auf den Referenzanschlussplatz (22') und den zumindest einen Anschlussplatz (22) lenken.

9. Vorrichtung nach zumindest einem der Ansprüche 1 bis 8, wobei
der Referenz-Anschlussplatz (22') eine Anschlussöffnung (23') ist und der zumindest eine Anschlussplatz (22) durch eine Anzahl an Anschlussöffnungen (23) gebildet wird, die der Anzahl der ersten Lichtwellenleiter (5) des zumindest einen Lichtwellenleiter-Bündels entspricht,
und/oder
die Anzahl der ersten Lichtwellenleiter (5) des zumindest einen Lichtwellenleiter-Bündels zumindest zwei oder drei oder vier beträgt.

10. Vorrichtung nach zumindest einem der Ansprüche 4 bis 9, wobei
die Probenhaltereinheit (3) eine Isolierhalterung (34) mit Anschlussöffnungen (34') für die ersten Lichtwellenleiter (5) und eine Isolierplatte (35) mit Anschlussöffnungen (35') für die zweiten Lichtwellenleiter (6) aufweist, wobei
die Isolierhalterung (34) und die Isolierplatte (35) miteinander verbunden sind, und die Anschlussöffnungen (34') der Isolierhalterung (34), die an der dritten Seite des Probenhalters (30) angeordnet ist, mit den Anregungsöffnungen (32) des Probenhalters (30) fluchten, und
die Anschlussöffnungen (35') der Isolierplatte (35), die an der zweiten Seite des Probenhalters (30) angeordnet ist, mit den Emissionsöffnungen (31) des Probenhalters (30) fluchten.

11. Vorrichtung nach zumindest einem der Ansprüche 1 bis 10, wobei
die Detektoreinheit (4) eine Platine (40), auf der die Mehrzahl der Photosensoren (40') und der Referenz-Photosensor (40") angeordnet sind, und eine Anschlussplatte (44) mit Anschlussöffnungen (45) für die zweiten Lichtwellenleiter (6) und den Referenz-Lichtwellenleiter (7) aufweist, wobei die Anschlussöffnungen (45) in der Anschlussplatte (40) korrespondierend zu der Mehrzahl der Photosensoren (40') und dem Referenz-Photosensor (40") auf der Platine (40) angeordnet sind, sodass ein Strahlengang von der Ausgangsseite jedes zweiten Lichtwellenleiters (6) auf einen der Photosensoren (40') und ein Strahlengang von der Ausgangsseite des Referenz-Lichtwellenleiters (7) auf den Referenz-Photosensor (40") trifft.

12. Vorrichtung nach Anspruch 11, wobei
die Detektoreinheit (4) ein Detektorgehäuse (41), in dem die Platine (40) mit den Photosensoren (40') und dem Referenz-Photosensor (40") befestigt ist, und einen Detektor-Gehäusedeckel (47) aufweist, der mit dem Detektorgehäuse (41) abdichtend verbunden ist und eine Durchgangsöffnung (47) aufweist, in der ein Rahmen (49), der die Anschlussöffnungen (45, 45') an der Anschlussplatte (44) umgibt, aufgenommen ist.

13. Vorrichtung nach zumindest einem der Ansprüche 1 bis 12, wobei die Anregungseinheit (2) einen Schrittmotor (11) mit einer Antriebsachse (A) aufweist, die mit dem Trägerrad (14) verbunden ist, wobei der Schrittmotor (11) dazu ausgebildet ist, das Trägerrad (14) in den zumindest zwei Drehwinkelstellungen anzuordnen, wobei
- der Schrittmotor (11) dazu ausgebildet ist, das Trägerrad (14) in einer ersten Drehrichtung zu bewegen,
und/oder
- der Schrittmotor (11) an einer Verbindungsplatte (12) befestigt ist, die eine Öffnung aufweist, durch die sich die Antriebsachse (A) des Schrittmotors (11) erstreckt, wobei die Halteplatte (21) parallel und beabstandet zu der Verbindungsplatte (12) angeordnet und zur Ausrichtung in Bezug auf die Antriebsachse (A) mit der Verbindungsplatte (12) durch zumindest ein Abstandshalterelement (12') verbunden ist.

14. Vorrichtung nach zumindest einem der Ansprüche 1 bis 13, wobei
die ersten Lichtwellenleiter (5), die zweiten Lichtwellenleiter (6) und der Referenz-Lichtwellenleiter (7) einen optischen Kern aus Kunststoff aufweisen.
